Europäisches Patentamt

European Patent Office

Office européen des brevets

(19)

(11) **EP 1 287 310 B1**

(12) **EUROPÄISCHE PATENTSCHRIFT**

(45) Veröffentlichungstag und Bekanntmachung des Hinweises auf die Patenterteilung:
**22.12.2004   Patentblatt 2004/52**

(21) Anmeldenummer: **01940535.6**

(22) Anmeldetag: **28.05.2001**

(51) Int Cl.⁷: $G01B\ 11/06$, $G01N\ 21/27$

(86) Internationale Anmeldenummer:
**PCT/EP2001/006070**

(87) Internationale Veröffentlichungsnummer:
**WO 2001/092820 (06.12.2001 Gazette 2001/49)**

(54) **VERFAHREN UND VORRICHTUNG ZUR BESTIMMUNG DER DICKE VON TRANSPARENTEN ORGANISCHEN SCHICHTEN**

METHOD AND DEVICE FOR DETERMINING THE THICKNESS OF TRANSPARENT ORGANIC LAYERS

PROCEDE ET DISPOSITIF POUR DETERMINER L'EPAISSEUR DE COUCHES ORGANIQUES TRANSPARENTES

(84) Benannte Vertragsstaaten:
**CH DE FI LI**

(30) Priorität: **26.05.2000  DE 10026282**

(43) Veröffentlichungstag der Anmeldung:
**05.03.2003   Patentblatt 2003/10**

(73) Patentinhaber: **Infralytic GmbH**
**48341 Altenberge (DE)**

(72) Erfinder:
• **HUTH-FEHRE, Thomas**
**48341 Altenberge (DE)**
• **FREITAG, Holger**
**48151 Münster (DE)**

(74) Vertreter: **Pfenning, Meinig & Partner GbR**
**Joachimstaler Strasse 10-12**
**10719 Berlin (DE)**

(56) Entgegenhaltungen:
**WO-A-94/12865**

• **PATENT ABSTRACTS OF JAPAN vol. 009, no. 133 (P-362), 8. Juni 1985 (1985-06-08) & JP 60 017304 A (MITSUBISHI JUKOGYO KK), 29. Januar 1985 (1985-01-29)**
• **PATENT ABSTRACTS OF JAPAN vol. 016, no. 058 (P-1311), 13. Februar 1992 (1992-02-13) & JP 03 255937 A (NKK CORP), 14. November 1991 (1991-11-14)**
• **PATENT ABSTRACTS OF JAPAN vol. 012, no. 090 (P-679), 24. März 1988 (1988-03-24) & JP 62 223610 A (SUMITOMO METAL IND LTD), 1. Oktober 1987 (1987-10-01)**

EP 1 287 310 B1

**Beschreibung**

Die Erfindung betrifft ein Verfahren zur Bestimmung der Dicke einer transparenten organischen Schicht auf einer Oberfläche nach dem Oberbegriff des unabhängigen Anspruchs 1 und eine Vorrichtung zur Durchführung des Verfahrens.

Die Kenntnis der Dicke einer transparenten organischen Schicht auf einer beschichteten Oberfläche ist z.B. bei der Produktion von Bandstahl von größter Wichtigkeit, bei der die Metalloberfläche mit einer Beölung versehen wird. Über die Feststellung der Dikke soll sowohl eine vollständige als auch ein gleichmäßig dicke Beölung, die für bestimmte Weiterverarbeitungsschritte unabdingbar ist, garantiert werden, um die in diesem Produktionszweig enormen Reklamationskosten zu vermeiden. Problematisch in diesem Bereich ist dabei, dass die verwendeten Oberflächen zum einen sehr vielfältig sind und sie zum anderen eine gewisse Rauhigkeit aufweisen.

Zur berührungslosen und zerstörungsfreien Ermittlung der Dicke von Schichten auf Oberflächen sind verschiedene Verfahren bekannt. Für glatte Oberflächen, wie sie z.B. Wafer und polierte Optiken aufweisen, finden die Ellipsometrie und die Interferenz an dünnen Schichten Anwendung. Viele Oberflächen sind für derartige Verfahren jedoch zu rauh, wie z.B. Bandstahl, Gussteile, Drehteile und dergleichen. Um organischen Schichten auf derartigen Oberflächen bestimmen zu können, bietet sich die Messung der Infrarotabsorption der Schicht an. Zur empfindlichsten Messung ist dazu die Grundschwingung der Moleküle heranzuziehen:

Aus der EP 0 186 620 A2 ist ein Verfahren zum Steuern der Schichtdicke einer Mischung aus einem Ölmaterial und Wasser bekannt, bei dem die Oberfläche mit Strahlung unterschiedlicher Wellenlänge bestrahlt wird und die reflektierte Strahlung erfasst wird. Dabei ist ein Filter auf die Absorptionswellenlänge des Öls angepasst und es wird die Absorption durch die Schicht festgestellt. Ein weiteres Filter dient als Referenzfilter, das zur Korrektur eines gemessenen Wertes bezüglich der Absorption von Infrarotstrahlen auf dem Oberflächenmaterial verwendet wird. Aus dem Grad der Absorption, die über die Transmission als Verhältnis der Intensität des einfallenden Lichtes und der Intensität des transmittierten Lichtes beruht, kann die Schichtdicke bestimmt werden. Die bei diesem bekannten Verfahren vorgesehene Korrektur des Absorptionswertes basiert allerdings auf der Annahme, dass der Untergrund spektral "grau" ist, und seine Spektralfunktion sich somit mit einer Konstanten annähern lässt. Bei rauhen Oberflächen ist jedoch die Lichtstreuung stets eine komplexe Funktion der Wellenlänge. Bei dieser "Ein-Punkt-Kompensation" ist nun nachteilig, dass bei dünnen Schichten und somit kleinem Signal der große Einfluss der Streuung des rauhen Untergrundes, der zudem je nach Oberfläche stark unterschiedlich ist, nicht mehr genügend kompensiert werden kann, was in vielen Anwendungen zu unakzeptablen Genauigkeiten führt.

Aus der US 5 612 782 ist ein Kalibrationsverfahren für ein Messgerät zur Messung von Ölschichten auf Blechen bekannt, das zwei Kalibrationsproben pro Oberflächenart verwendet, eine dauerbeölte grobe, die werksmäßig vermessen wird und eine leere Probe des tatsächlich zu vermessenen Blechs, das jedes Mal zu beschaffen und vermessen ist. Hierdurch soll der Einfluss der Rauhigkeit des aktuellen Blechs kompensiert werden. Dieses Verfahren ist umständlich, da neben der Beschaffung der Proben der Messaufwand groß ist und trotzdem die Bestimmung der Dicke noch ungenau ist.

WO 94/12865 beschreibt ein Verfahren und eine Vorrichtung zur Charakterisierung einer Oberfläche, bei der eine IR Strahlungsquelle auf die zu inspizierende Oberfläche gerichtet wird und ein Teil des reflektierten Lichts durch eine Filteranordnung gelenkt wird, die das Licht in eine Mehrzahl von Wellenlängenbereichen aufteilt, wobei die Wellenlängen bestimmten physikalischen Eigenschaften einer auf der Oberfläche befindlichen dünnen Schicht entspricht. Die Intensität der Strahlung in den Wellenlängenbereichen wird detektiert und die resultierenden Signale zur Charakterisierung der Oberfläche analysiert.

Der Erfindung liegt die Aufgabe zugrunde, ein Verfahren und eine Vorrichtung zur Bestimmung der Dicke von transparenten organischen Schichten auf Oberflächen bereitzustellen. Das Verfahren bzw. die Vorrichtung ermöglichen eine Steigerung der Genauigkeit der Dickenbestimmung auch bei dünnen Schichten und insbesondere auf rauhen Oberflächen mit unbekannter Rauhigkeit.

Diese Aufgabe wird erfindungsgemäß durch die Merkmale der unabhängigen Ansprüche 1 und 12 gelöst.

Durch die in den abhängigen Ansprüchen angegebenen Maßnahmen sind vorteilhafte Weiterbildungen und Verbesserungen möglich.

Zur Bestimmung der Dicke wird die beschichtete Oberfläche mit Strahlung, die von der interessierenden Beschichtung absorbiert wird, beleuchtet, und das reflektierte bzw. zurückgestreute Licht eingesammelt und spektral selektiert. Daraus wird dann das spektrale Reflexionsvermögen der Oberfläche ermittelt. Hierbei ist es vorteilhaft, nur das außerhalb des Direktreflexes diffus gestreute Licht zu erfassen. Das so gemessene Reflexionsvermögen lässt sich als Produkt des Reflexionsvermögens der reinen Oberfläche mit dem Absorptionsspektrum der zu vermessenden Schicht auffassen. Ist das spektrale Reflexionsvermögen der reinen Oberfläche bekannt, so lässt sich die Absorption bestimmen und mit Hilfe des Lambert-Beer'schen Gesetzes oder einer seiner Näherungen für dünne Schichten in eine Schichtdicke umrechnen. Das Reflexionsvermögen der reinen Oberfläche lässt sich an beschichtetem Material durch Messung der Absorption außerhalb der Molekülabsorptionsbande ermitteln und wird für den Bereich der Molekülabsorption extrapoliert. Für die Kompensation des Untergrundes bzw. der reinen Oberfläche werden mindestens zwei Stützstellen außerhalb der Molekülabsorption verwendet, wobei vorteilhafterweise als Kompensationsfunktion mathematisch die Form eines Polynoms mindestens ersten Grades, d.h. einer Geraden gewählt wird. Zur Vereinfachung der Berechnung werden vier Bandpaßfilter verwendet, davon zwei innerhalb des Absorptionswellenlängenbereichs, wobei die Durchlassbreite und - profile der vier Bandpassfilter identisch und ihre Mittelwellenlängen zueinander äquidistant sind.

Das erfindungsgemäße Verfahren erlaubt somit eine Steigerung der Genauigkeit der Dickenbestimmung auch bei dünnen Schichten auf Oberflächen unbekannter Rauhigkeit, wobei der Aufbau der Schichtdikkenmessvorrichtung vereinfacht wird und der Messaufwand verringert wird.

Das erfindungsgemäße Verfahren wird unter Verwendung eines Ausführungsbeispiels einer Vorrichtung unter Heranziehung der Zeichnung näher erläutert.

Es zeigen

Fig. 1 den prinzipiellen Aufbau einer Vorrichtung zur Bestimmung der Schichtdicke nach dem erfindungsgemäßen Verfahren, und

Fig. 2 das Absorptionsspektrum eines aliphatischen Öls neben Durchlasskurven von Interferenzfiltern.

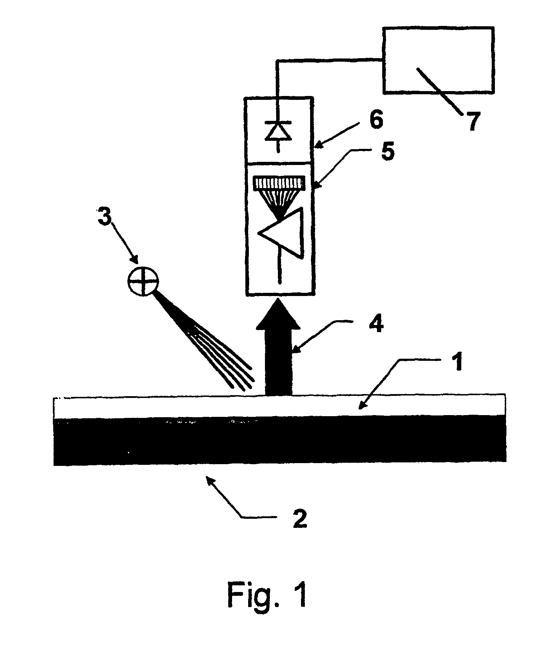

In Fig. 1 ist eine Vorrichtung zur Bestimmung der Schichtdicke eines Ölfilms 1 auf einem Stahlblech 2 unbekannter Rauhigkeit dargestellt. Eine breitbandige Lichtquelle 3 beleuchtet die beschichtete Oberfläche, wobei die Lichtquelle 3 eine Strahlung enthält, die in dem Ölfilm eine Grundschwingung der Moleküle anregt. Das Licht durchdringt den Ölfilm 1 und wird an der Metalloberfläche 2 reflektiert und gestreut und durchquert die Ölschicht 1 ein zweites Mal. Das zurückgestrahlte Licht 4 wird von einem Spektrometer 5, das im dargestellten Fall ein Prismenspektrograph ist, eingesammelt, wobei jedoch auch andere Spektrometerprinzipien wie die Filterung des Lichtes mit Bandpassfiltern Verwendung finden. Zur Vereinfachung der Darstellung werden im folgenden die Wellenlängenbereiche immer durch Filter repräsentiert.

Die in den verschiedenen Wellenlängen gemessene zurückgestreute Strahlung 4 wird von dem in dem Spektrometer 5 enthaltenen Empfänger oder Detektor 6 in elektrische Signale umgewandelt, die einer Auswertevorrichtung 7 zugeführt werden. Die Auswertevorrichtung 7 kann ein externer Computer sein, es können aber auch ein oder mehrere Mikroprozessoren oder - controller vorgesehen sein, die zusammen mit dem Spektrometer 5 in einem Gehäuse aufgenommen sind, wodurch ein tragbares Handmessgerät zur Schichtdickenmessung an Ölen und Wachsen zur Verfügung gestellt werden kann.

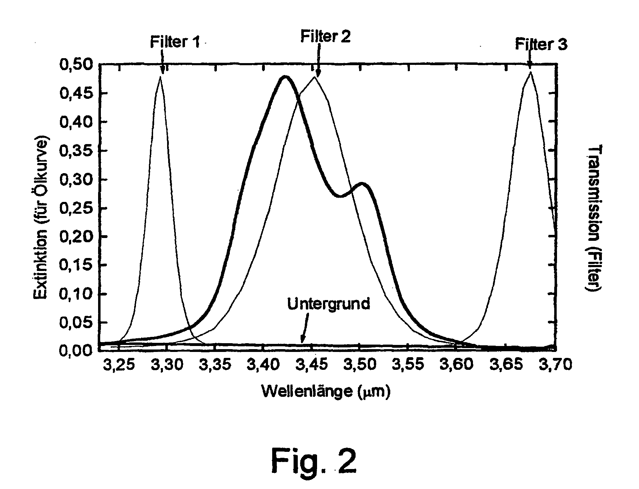

In Fig. 2 ist ein typisches Spektrum eines aliphatischen Öls im Bereich der Fundamentalen der Schwingungen in durchgezogener Linie dargestellt. Die Extinktion oder Absorption für Öl weist ein Maximum im Bereich von 3,4 μm bis 3,45 μm und ein Nebenmaximum im Bereich von 3,5 μm auf. Die gestrichelte Kurve Filter 2 zeigt das Durchlassspektrum eines im Spektrometer 5 verwendeten Filters, das sein Transmissionsmaximum im Absorptionswellenlängenbereich aufweist.

Entsprechend der Erfindung, wie weiter unten beschrieben, werden anstelle des Filters 2 zwei Filter 2' und 2" verwendet.

Zur Erfassung des auf die mit dem Ölfilm 1 beschichtete Metalloberfläche 2 von der breitbandigen Lichtquelle 3 aufgestrahlten Lichts, das nach zweimaligem Durchtritt durch den Ölfilm 1 zurückgestreut wird, wird das Filter 2 in den Strahlungsweg des zurückgestreuten Lichtes 4 eingesetzt, wobei der Detektor 6 ein Signal entsprechend der Intensität der Strahlung in ein elektrisches Signal umwandelt und an die Auswerteeinrichtung 7 gibt. Diese Intensität $I_{\lambda 2}$ wird in der Auswerteeinrichtung 7 auf eine Intensität $I_{ST}$ bezogen, wobei die Intensität IST durch eine Messung des auf eine Standardfläche aufgestrahlten und von dieser zurückgeworfenen Lichts, das durch das Filter 2 hindurchgeht und vom Detektor 6 erfasst wird, gewonnen wurde. Diese Messungen werden in größeren zeitlichen Abständen durchgeführt, wobei als Reflexionsstandardfläche jede bekannte Oberfläche, z.B. ein Weißstandard oder eine bekannte Metallfläche verwendet werden kann. Somit wird das Reflexionsvermögen R2 der mit dem Ölfilm 1 beschichteten Metalloberfläche 2 gewonnen zu

$$R2 = I_{\lambda 2}/I_{ST2}.$$

Da die Schichtdicke nur des Öls 1 bestimmt werden soll, muss der Einfluss der Metalloberfläche 2 ausgeschaltet werden. Dies geschieht dadurch, dass die auf die beschichtete Oberfläche aufgestrahlte und zurückgestreute Strahlung 4 in Wellenlängenbereichen erfasst wird, die außerhalb des Absorptionswellenlängenbereichs liegen. Dazu sind mindestens zwei Wellenlängenbereiche vorgesehen, die benachbart zu dem Absorptionswellenlängenbereich vorgesehen sind und die kürzere und längere Wellenlängen als die Absorptionswellenlängen umfassen. In Fig. 2 sind die Filterkurven der im Spektrometer 5 verwendeten Interferenzfilter, Filter 1 und Filter 3 dargestellt, wobei das Filter 1 beispielsweise in einem Wellenlängenbereich zwischen 3,25 und 3,34 μm liegt und das Filter 3 etwa zwischen 3,6 und 3,7 μm. Diese Wellenlängen sind vorteilhaft für gesättigte aliphatische Beschichtungen, für Öle anderer chemischer Zusammensetzung verschieben sich die Wellenlängenbereiche entsprechend.

Von dem Detektor 6 werden somit die Intensitäten des zurückgestreuten Lichts 4 im Wellenlängenbereich des Filters 1 und im Wellenlängenbereich des Filters 3 erfasst und die Auswerteeinheit 7 dividiert diese Intensitäten durch die Intensitäten, die von der an der Standardfläche zurückgestreuten Strahlung in den Wellenlängenbereichen des Filters 1 und des Filters 3 geliefert werden. Somit können die Reflexionsvermögen $R1 = I_{\lambda 1}/I_{ST1}$ und $R3 = I_{\lambda 3}/I_{ST3}$ bestimmt werden. Durch die Bildung der Verhältnisse der Intensitäten der an der beschichteten Oberfläche zurückgestreuten Strahlung und der Intensitäten des an der Standardoberfläche zurückgestrahlten Lichts werden Gerätegrößen, insbesondere auch Langzeitänderungen und dergleichen, eliminiert.

Zur Bestimmung des Einflusses des Untergrundes, d.h. der unbeschichteten Metalloberfläche 2 werden die von der Wellenlänge abhängigen Werte des Reflexionsvermögens, die die Stützstellen einer Funktion angeben, verbunden, wobei sich eine Gerade ergibt d.h. die Funktion eines Polynoms ersten Grades. Diese Gerade ist in Fig. 2 mit Untergrund bezeichnet, wobei sie dort zur Vereinfachung der Darstellung eine Steigung 0 aufweist. Im allgemeinen Fall berechnet sich der (skalare) Korrekturwert als Skalarprodukt der Transmissionsfunktion des Filters mit der Untergrundfunktion. Im vereinfachten Fall mit einer Geraden als Untergrundfunktion reduziert sich der Rechenaufwand auf die Ermittlung des Funktionswertes der Geraden bei der Mittelwellenlänge.

Wenn Werte für die Reflexionsvermögen in den unterschiedlichen Wellenlängenbereichen verwendet werden, wird zur Kompensation bzw. Eliminierung des Untergrundes das Reflexionsvermögen R2 für die beschichtete Oberfläche im Absorptionswellenlängenbereich durch das Reflexionsvermögen der unbeschichteten Metalloberfläche 2 im Absorptionswellenlängenbereich (RU) dividiert, da das Absorptionsspektrum der Ölschicht eine mit dem spektralen Reflexionsvermögen der Metalloberfläche multiplizierte Funktion ist. Aus dem Verhältnis R2:RU lässt sich dann die Extinktion ermitteln.

Selbstverständlich kann auch die Extinktion E proportional zu $-\ln(I_\lambda/I_{ST})$ anstelle der Berechnungen mit dem Reflexionsvermögen verwendet werden. In dem Falle werden die Extinktionswerte über die Intensitäten in den unterschiedlichen Wellenlängenbereichen bestimmt und aus den Extinktionswerten der beiden äußeren Wellenlängenbereiche, die in Fig. 2 mit Filter 1 und Filter 3 bezeichnet sind, lässt sich der Untergrund, d.h. die Metalloberfläche 2 als Gerade annähern, die sich dann vom Extinktionswert der beschichteten Oberfläche im Absorptionswellenlängenbereich abziehen lässt.

Die Extinktion ist unter Berücksichtigung des Lambert-Beer'schen Gesetzes oder einer seiner Näherungen für dünne Schichten proportional zu der Dicke der durchstrahlten Schicht, so dass die Dicke des Ölfilms 1 aus dem hinsichtlich des Untergrundes kompensierten Extinktionswert bestimmen lässt. Die dazu notwendige Proportionalitätskonstante wird experimentell gefunden und ist unabhängig von der Rauhigkeit der Metalloberfläche.

Entsprechend dem Ausführungsbeispiel wird eine besonders vereinfachte Ausführung der Untergrundkompensation ermöglicht. Anstelle der drei Filter entsprechend Fig. 2 werden vier Bandpaßfilter, nämlich Filter 1, Filter 2' und Filter 2" sowie Filter 3 zur Erfassung der spektralen Reflexion verwendet. Dabei müssen die Durchlassbereiche dieser vier Filter die folgenden Kriterien erfüllen:

1. ihre Mittelwellenlängen müssen zueinander äquidistant sein,
2. ihre Durchlassbreiten und -profile müssen identisch sein,
3. die beiden mittleren Filter, Filter 2' und 2" überdecken zusammen den Absorptionswellenlängenbereich.

In diesem Fall vereinfacht sich der gesamte Algorithmus der Extinktionsermittlung nach dem Lambert-Beer'schen Gesetz unter Einbeziehung der Untergrundkorrektur zu der Formel: $E = \ln((R1 \times R3)/(R2' \times R2''))$, wobei R1 und R3 die Werte des Reflexionsvermögens der beschichteten Oberfläche ($I_{\lambda 1}/I_{ST1}$ und $I_{\lambda 3}/I_{ST3}$) in den beiden äußeren, außerhalb des Absorptionswellenlängenbereichs liegenden Wellenlängenbereiche sind und R2' und R2" die Werte des Reflexionsvermögens entsprechend zu den beiden innerhalb des Absorptionswellenlängenbereich liegenden Filterbereichen gehören.

Diese Vereinfachung ermöglicht es, auch mir sehr leistungsschwachen und damit preiswerten Mikrocontrollern eine hohe Mess- und Auswerterate zu erzielen.

Die oben angegebenen Berechnungen lassen sich mit unterschiedlichen fotometrischen Größen berechnen, wichtig ist, dass die Extinktion bzw. Absorption der Schicht unter Eliminierung des Untergrundes, d.h. der Metall- oder sonstigen Oberfläche bestimmt wird, aus der über die Proportionalität entsprechend dem Lambert-Beer-Gesetz die Dicke der Schicht berechnet werden kann.

Im Ausführungsbeispiel sind die Interferenzfilter im Strahlengang des von der beschichteten Oberfläche zurückgestreuten Lichts angeordnet, sie können jedoch auch im Strahlengang zwischen Lichtquelle 3 und beschichteter Oberfläche vorgesehen sein.

Bei den oben beschriebenen Messungen ist es vorteilhaft, nur die zurückgestreute Strahlung außerhalb des Glanzbildes, d.h. außerhalb des Direktreflexes einzusammeln. Es wird somit im Wesentlichen das diffus gestreute Licht erfasst und es wird die Reflexion an der Grenzschicht zwischen Öl und Luft im Wesentlichen vermieden.

Das beschriebene Verfahren ist für Öle, Fette, Wachse, Lacke auf unterschiedlichen rauhen Oberflächen, die auch, solange sie keine eigenständigen spektralen Absorptionen aufzeigen, andere als Metall sein können, verwendbar, wenn sie genügend transparent sind.

**Patentansprüche**

1. Verfahren zur Bestimmung der Dicke einer transparenten organischen Schicht auf einer Oberfläche, wobei die beschichtete Oberfläche mit Strahlung, die die organischen Moleküle in der zu messenden Schicht zu einer Grundschwingung anregt, beleuchtet wird und die zurückgestreute Strahlung spektral selektiv in mindestens zwei Wellenlängenbereichen außerhalb des Absorptionswellenlängenbereichs der organischen Moleküle, aber benachbart zu diesem, gemessen wird, und abhängig von diesen Meßwerten eine die unbeschichtete Oberfläche berücksichtigende Funktion bestimmt wird, wobei unter Berücksichtigung der detektierten Strahlung und des Absorptionsspektrums der Moleküle der organischen Schicht deren Dicke bestimmt wird,
   **dadurch gekennzeichnet,**
   **dass** zur spektralen Erfassung vier Bandpaßfilter verwendet werden, von denen zwei den Absorptionswellenlängenbereich überdecken und die anderen zwei den jeweiligen Wellenlängenbereich außerhalb des Absorptionswellenlängenbereichs überdecken, und dass die Durchlaßbreiten und -profile der Bandpaßfilter identisch und ihre Mittelwellenlängen äquidistant gewählt werden, und dass die Extinktion der Schicht unter Verwendung der innerhalb des Absorptionswellenlängenbereichs detektierten Strahlung und der die unbeschichtete Oberfläche berücksichtigenden Funktion ermittelt und aus dieser Funktion die Schichtdicke bestimmt wird.

2. Verfahren nach Anspruch 1, **dadurch gekennzeichnet, dass** mit den Meßwerten der spektral selektiv detektierten, von der beschichteten Oberfläche zurückstreuenden Strahlung das jeweilige spektrale Reflexionsvermögen unter Verwendung von Meßwerten der von einem Standard zurückstreuenden spektral detektierten Strahlung bestimmt wird.

3. Verfahren nach Anspruch 1 oder Anspruch 2, **dadurch gekennzeichnet, dass** von den mindestens zwei Wellenlängenbereichen außerhalb des Absorptionswellenlängenbereichs einer bei kürzeren und ein anderer bei längeren Wellenlängen als der Absorptionswellenlängenbereich gewählt wird.

4. Verfahren nach einem der Ansprüche 1 bis 3, **dadurch gekennzeichnet, dass** als die die unbeschichtete Oberfläche berücksichtigende Funktion ein Polynom mindestens ersten Grades gewählt wird.

5. Verfahren nach einem der Ansprüche 1 bis 4, **dadurch gekennzeichnet, dass** zur Kompensation des Einflusses der unbeschichteten Oberfläche auf die Schichtdickenbestimmung das gemessene Reflexionsvermögen im Absorptionswellenlängenbereich durch den Wert der Funktion als Reflexionsvermögen in dem Absorptionswellenlängenbereich dividiert wird und daraus anschließend die Extinktion ermittelt wird.

6. Verfahren nach einem der Ansprüche 1 bis 4, **dadurch gekennzeichnet, dass** zur Kompensation des Einflusses der unbeschichteten Oberfläche auf die Schichtdickenbestimmung der Wert der Funktion als Extinktion in dem Absorptionswellenlängenbereich bestimmt wird und von der im Absorptionswellenlängenbereich gemessenen Extinktion abgezogen wird.

7. Verfahren nach Ansprüche 1 bis 6, **dadurch gekennzeichnet, dass** die Extinktion der Schicht allein der Formel

$$E = 1n((R1 \cdot R3)/(R2' \cdot R2''))$$

folgt, wobei R2' und R2'' das Reflexionsvermögen innerhalb des Absorptionswellenlängenbereichs unter Verwendung der ersten zwei Filter und R1 und R3 das Reflexionsvermögen in den außerhalb des Absorptionswellenlängenbereichs liegenden Wellenlängenbereichen unter Verwendung der anderen zwei Filter sind.

8. Verfahren nach einem der Ansprüche 1 bis 7, **dadurch gekennzeichnet, dass** der Absorptionswellenlängenbereich zwischen 3,3 und 3,6 µm und die außerhalb des Absorptionswellenlängenbereichs liegenden Wellenlängenbereiche zwischen 3,2 und 3,35 µm sowie 3,6 und 3,8 µm gewählt werden.

9. Verfahren nach einem der Ansprüche 1 bis 8, **dadurch gekennzeichnet, dass** die von der beschichteten Oberfläche zurückgestreute Strahlung nur außerhalb des Direktreflexes eingesammelt und detektiert wird.

10. Verfahren nach einem der Ansprüche 1 bis 9, **dadurch gekennzeichnet, dass** die Dicke eines Ölfilms auf rauhen Metalloberflächen bestimmt wird.

11. Verfahren nach Anspruch 10, **dadurch gekennzeichnet, dass** die Dicke des Ölfilms auf Bandstahl bestimmt wird.

12. Vorrichtung zur Durchführung des Verfahrens nach einem der Ansprüche 1 bis 11 mit einer Strahlungsquelle (3), einer Filteranordnung (5), einer Empfängeranordnung (6) und einer Auswerteeinheit (7), wobei die Filteranordnung (5) mindestens zwei Bandpassfilter zum Überdecken des Absorptionswellenlängenbereichs und mindestens zwei Bandpassfilter zum Überdecken von Wellenlängenbereichen benachbart zu dem Absorptionswellenlängenbereich aufweist, und wobei die Durchlassbreiten und -profile der Bandpassfilter identisch und ihre Mittelwellenlängen äquidistant sind.

13. Vorrichtung nach Anspruch 12, **dadurch gekennzeichnet, dass** die Filteranordnung (5) durch ein rotierendes Rad mit Interferenzfiltern realisiert ist.

14. Vorrichtung nach Anspruch 12 und Anspruch 13, **dadurch gekennzeichnet, dass** die Strahlungsquelle (3) breitbandig ist.

**Claims**

1. Method for determining the thickness of a transparent organic layer on a surface, and the coated surface is illuminated by radiation which causes a base oscillation of the organic molecule in the layer to be measured, and the returned scattered radiation is spectrally measured selectively in at least two wavelength ranges outside the absorption wavelength range of the organic molecules but adjacent thereto, and in dependence of these measuring values a function is determined which takes into account the uncoated surface, and their thickness is determined whilst taking into consideration the detected radiation and the absorption spectrum of the molecule of the organic layers, **characterised in that** for the purpose of spectral detection four band pass filters are used of which two cover the absorption wavelength range, and the other two cover the respective wavelength range outside the absorption wavelength range, and the pass widths and pass profiles of the band pass filters are chosen to be identical, and their medium wavelengths are chosen to be equidistant, and extinction of the layer is detected by use of radiation detected within the absorption wavelength range and the function which takes into account the uncoated surface from which function is determined the layer thickness.

2. Method according to Claim 1, **characterised in that** by way of the measuring values of the spectral selectively detected radiation which scatters back from the coated surface is determined the respective spectral reflex property by using measuring values of radiation scattering back from a standard.

3. Method according to Claim 1 or Claim 2, **characterised in that** of the at least two wavelength ranges outside the absorption wavelength range is selected one at shorter and another at longer wavelength than the absorption wavelength range.

4. Method according to one of Claims 1 to 3, **characterised in that** a polynom of at least first grade is chosen as a function which takes into account the uncoated surface.

5. Method according to one of Claims 1 to 4, **characterised in that** for compensation of the influence of the uncoated surface on the layer thickness detection the measured reflex property in the absorption wavelength range is divided by the value of the function as reflex property in the absorption wavelength range of which the extinction is subsequently determined.

6. Method according to one of Claims 1 to 4, **characterised in that** for compensation of the influence of the uncoated surface on the layer thickness determination is determined the value of function as extinction in the absorption wavelength range and deducted from the extinction measured in the absorption wavelength range.

7. Method according to Claims 1 to 6, **characterised in that** the extinction of the layer follows only the formula

$$E = 1n \left( (R1 \times R3) / (R2' \times R2'') \right)$$

where R2' and R2'' are the reflex property within the absorption wavelength range using the first two filters, and R1 and R3 are the reflex property in the wavelength areas outside the absorption wavelength area whilst utilising the other two filters.

8. Method according to one of Claims 1 to 7, **characterised in that** the absorption wavelength range is selected between 3.3 and 3.6 μm, and the wavelength ranges outside the absorption wavelength ranges are selected between 3.2 and 3.35 μm as well as 3.6 and 3.8 μm.

9. Method according to one of Claims 1 to 8, **characterised in that** radiation scattered back from the coated surface is gathered and detected only outside the direct reflex.

10. Method according to one of Claims 1 to 9, **characterised in that** the thickness of an oil film is determined on rough metal surfaces.

11. Method according to Claim 10, **characterised in**

**that** the thickness of the oil film is determined on steel strips.

12. Device for carrying out the method according to one of Claims 1 to 11 with a radiation source (3), a filter arrangement (5), a receiving arrangement (6) and an evaluation unit (7), and the filter arrangement (5) comprises at least two band pass filters to cover the absorption wavelength range and at least two band pass filters to cover the wavelength range adjacent the absorption wavelength range, and the pass width and pass profiles of the band pass filter are identical and their medium wavelengths equidistant.

13. Device according to Claim 12, **characterised in that** the filter arrangement (5) is realised by a rotary wheel with interference filters.

14. Device according to Claim 12 and Claim 13, **characterised in that** the radiation source (3) is broadband.


**Revendications**

1. Procédé pour déterminer l'épaisseur d'une couche organique transparente sur une surface, la surface revêtue étant éclairée par un rayonnement qui engendre une oscillation de base des molécules organiques contenues dans la couche à mesurer, et le rayonnement réfléchi étant mesuré sélectivement par analyse spectrale dans au moins deux domaines spectraux situés en dehors du domaine spectral d'absorption des molécules organiques, néanmoins au voisinage de celui-ci, et, en fonction de ces valeurs de mesure, une fonction faisant intervenir la surface non revêtue étant déterminée, dans lequel l'épaisseur de la couche organique est déterminée en tenant compte du rayonnement détecté et du spectre d'absorption des molécules de la couche organique, **caractérisé en ce que**, pour l'analyse spectrale, on utilise quatre filtres passe-bande, dont deux couvrent le domaine spectral d'absorption et les deux autres couvrent des domaines spectraux respectifs situés en dehors du domaine spectral d'absorption, et **en ce que** les largeurs et les profils de bande passante des filtres passe-bande sont identiques et leurs longueurs d'onde moyennes sont choisies équidistantes, et **en ce que** l'absorbance de la couche est établie en utilisant le rayonnement détecté à l'intérieur du domaine spectral d'absorption et la fonction faisant intervenir la surface non revêtue, et l'épaisseur de la couche est déterminée à partir de cette fonction.

2. Procédé selon la revendication 1, **caractérisé en ce que**, avec les valeurs de mesure du rayonnement réfléchi par la surface revêtue et détecté sélectivement par analyse spectrale, le comportement de réflexion spectral correspondant est déterminé en utilisant des valeurs de mesure du rayonnement détecté par analyse spectrale, réfléchi par un standard.

3. Procédé selon la revendication 1 ou 2, **caractérisé en ce que** parmi lesdits au moins deux domaines spectraux situés en dehors du domaine spectral d'absorption, l'un est choisi avec des longueurs d'onde plus courtes que celles du domaine spectral d'absorption et un autre avec des longueurs d'ondes plus longues.

4. Procédé selon l'une quelconque des revendications 1 à 3, **caractérisé en ce que**, en tant que fonction faisant intervenir la surface non revêtue, on choisit un polynôme au moins du premier degré.

5. Procédé selon l'une quelconque des revendications 1 à 4, **caractérisé en ce que** pour compenser l'influence de la surface non revêtue sur la détermination de l'épaisseur de la couche, le comportement de réflexion mesuré dans le domaine spectral d'absorption est divisé par la valeur de la fonction en tant que comportement de réflexion dans le domaine spectral d'absorption et, à partir de là, on établit l'absorbance.

6. Procédé selon l'une quelconque des revendications 1 à 4, **caractérisé en ce que** pour compenser l'influence de la surface non revêtue sur la détermination de l'épaisseur de la couche, on détermine la valeur de la fonction en tant qu'absorbance dans le domaine spectral d'absorption et on soustrait de celle-ci l'absorbance mesurée dans le domaine spectral d'absorption.

7. Procédé selon l'une quelconque des revendications 1 à 6, **caractérisé en ce que** l'absorbance de la couche suit seulement la formule

$$E = \ln((R1.R3) / (R2'.R2''))$$

dans laquelle R2' et R2'' sont le comportement de réflexion à l'intérieur du domaine spectral d'absorption en utilisant les deux premiers filtres et R1 et R3 sont le comportement de réflexion dans les domaines spectraux situés en dehors du domaine spectral d'absorption en utilisant les deux autres filtres.

8. Procédé selon l'une quelconque des revendications 1 à 7, **caractérisé en ce que** le domaine spectral d'absorption est choisi entre 3,3 et 3,6 μm et les domaines spectraux situés en dehors du domaine spectral d'absorption sont choisis entre 3,2 et 3,35 µm, ainsi qu'entre 3,6 et 3,8 µm.

9. Procédé selon l'une quelconque des revendications 1 à 8, **caractérisé en ce que** le rayonnement réfléchi par la surface revêtue est collecté et détecté uniquement en dehors du reflet direct.

10. Procédé selon l'une quelconque des revendications 1 à 9, **caractérisé en ce que** l'on détermine l'épaisseur d'une pellicule d'huile sur des surfaces métalliques rugueuses.

11. Procédé selon la revendication 10, **caractérisé en ce que** l'épaisseur de la pellicule d'huile est déterminée sur un feuillard d'acier.

12. Dispositif de mise en oeuvre du procédé selon l'une quelconque des revendications 1 à 11, comprenant une source de rayonnement (3), un système de filtres (5), un système de réception (6) et une unité d'analyse (7), dans lequel le système de filtres (5) comporte au moins deux filtres passe-bande pour couvrir le domaine spectral d'absorption et au moins deux filtres passe-bande pour couvrir les domaines spectraux voisins du domaine spectral d'absorption, et dans lequel les largeurs et les profils de bande passante des filtres passe-bande sont identiques et leurs longueurs d'ondes moyennes sont équidistantes.

13. Dispositif selon la revendication 12, **caractérisé en ce que** le système de filtres (5) est réalisé par une roue rotative munie de filtres d'interférence.

14. Dispositif selon les revendications 12 et 13, **caractérisé en ce que** la source de rayonnement (3) est à large bande.

**Fig. 1**

Fig. 2